# FASCICULE DE BREVET EUROPEEN

(11) **EP 0 800 426 B1**
(45) Date de publication et mention de la délivrance du brevet: **18.11.1998**
(21) Numéro de dépôt: 96901013.1
(22) Date de dépôt: 03.01.1996
(51) Int. Cl.: B21D 53/88, B21D 17/02

(54) **PROCEDE DE FABRICATION DE PIECES PLATES, ET PIECES PLATES FORMEES PAR SA MISE EN UVRE**
VERFAHREN ZUR HERSTELLUNG VON FLACHEN WERKSTÜCKEN UND DURCH DIESES VERFAHREN HERGESTELLTE FLACHE WERKSTÜCKE
METHOD FOR MAKING FLAT COMPONENTS, AND RESULTING FLAT COMPONENTS

(30) Priorité: 04.01.1995 FR 9500048
(43) Date de publication de la demande: 15.10.1997
(73) Titulaire: NICOMATIC, 74890 Bons-en-Chablais (FR)
(72) Inventeur: LECOURTOIS, Eugène, F-91540 Echarcon (FR)
(74) Mandataire: Arnaud, Jean Pierre Alfred
(86) Numéro de dépôt international: FR9600009
(87) Numéro de publication internationale: WO9620799

(56) Documents cités:
- EP-A- 0 369 578
- DE-U- 9 105 230
- US-A- 2 870 291
- US-A- 4 693 027

## Description

La présente invention concerne un procédé de fabrication de pièces plates par des étapes de découpe et de mise en forme d'une feuille d'un matériau selon le préambule de la revendication 1, ainsi que des pièces plates obtenues par sa mise en oeuvre selon le préambule de la revendication 8.

Les claviers des ordinateurs actuellement réalisés comportent le plus souvent, pour chaque touche, un ressort plat dont la fonction principale est de rappeler la touche en position sortie. Ce ressort plat fait aussi souvent partie d'un dispositif de contact, c'est-à-dire d'un dispositif qui, lorsque la touche est enfoncée, établit un contact électrique entre au moins deux plages métalliques d'un organe placé sous la touche.

Compte tenu du grand nombre de touches des claviers, le nombre de ressorts qui doivent être manipulés est très grand. Ces ressorts sont habituellement fabriqués en grande série et livrés en vrac. Il arrive fréquemment que plusieurs ressorts se collent les uns aux autres. En outre, avant leur positionnement dans le logement prévu dans le clavier, ces ressorts plats sont orientés en rotation et empilés les uns sur les autres avant d'être introduits. Ils ont alors une position très favorable à leur collage les uns aux autres. Lorsque deux ressorts sont collés et introduits à la place d'un seul ressort, le clavier obtenu doit le plus souvent être mis au rebut. Ainsi, non seulement un certain nombre de claviers doit être mis au rebut, mais encore il est nécessaire de les vérifier avant leur conditionnement.

Les documents EP-A-0 369 578, US-A-2 870 291, DE-U-91 05 230 et US-A-4 693 027 décrivent tous des pièces plates ayant des saillies de divers types. Aucun de ces documents ne suggère une quelconque réalisation des saillies permettant la solution du problème précité, c'est-à-dire afin qu'elles empêchent le collage des pièces plates.

L'invention a pour objet de remédier à cet inconvénient en empêchant le collage mutuel des ressorts avant leur introduction dans les claviers. Selon l'invention, cet objet est atteint par un procédé tel que défini dans la revendication 1 et par une pièce plate telle que définie dans la revendication 8.

Bien qu'on décrive l'invention dans cette application particulière, elle convient de façon générale à de nombreux autres domaines dans lesquels des pièces plates, le plus souvent formées par découpe d'une feuille d'un matériau, par exemple élastique, risquent de se coller.

Selon l'invention, les pièces plates, par exemple des ressorts plats, subissent une déformation qui forme des saillies qui empêchent le collage mutuel des grandes faces de ces pièces.

Dans un mode de réalisation avantageux, les étapes de mise en forme et de déformation du matériau de la feuille sont exécutées en même temps sur une même pièce.

Dans un autre mode de réalisation, les étapes de découpe, de mise en forme et de déformation du matériau de la feuille sont exécutées en même temps sur une même pièce.

Dans une première forme préférée d'exécution, l'étape de découpe comprend la découpe de pièces plates ayant une symétrie de rotation autour d'un axe, et l'étape de déformation forme des saillies qui sont disposées de manière que, ensemble, elles ne présentent pas de symétrie de rotation autour de cet axe. Dans une seconde forme préférée d'exécution, l'étape de découpe comprend la découpe de pièces plates ayant une symétrie de rotation autour d'un axe, et l'étape de déformation donne des saillies qui, séparément, ne possèdent pas de symétrie de rotation.

De préférence, une saillie au moins a une forme de N ou de Z.

Dans une première forme préférée d'exécution, l'étape de déformation est effectuée après l'étape de découpe, et le procédé comprend le positionnement de chaque pièce plate pour l'étape de déformation. Dans une seconde forme préférée d'exécution, l'étape de déformation est effectuée avant l'étape de découpe, et l'étape de découpe est réalisée en position repérée par rapport aux saillies formées dans l'étape de déformation.

Lorsque la pièce a une symétrie de rotation autour d'un axe, il est préférable que la disposition des saillies ou la configuration d'une saillie au moins ne présente pas de symétrie de rotation autour de cet axe.

De préférence, chaque pièce plate comporte plusieurs saillies.

Dans un mode de réalisation préféré, les pièces plates sont avantageusement formées d'un matériau élastique, afin qu'elles jouent le rôle d'un ressort. Elles peuvent être conductrices ou non. Lorsque les pièces plates forment des pièces conductrices, elles peuvent former des ressorts de contact de clavier utilisés pour relier électriquement plusieurs plages de contact d'une carte de clavier.

D'autres caractéristiques et avantages de l'invention seront mieux compris à la lecture de la description qui va suivre d'exemples de réalisation, faite en référence aux dessins annexés sur lesquels:
la figure 1 est une vue en plan d'une pièce plate formant un ressort de clavier;
la figure 2 est une coupe par un plan central de la pièce de la figure 1;
la figure 3 est une vue en plan d'une autre pièce formant un ressort de clavier selon l'invention;
la figure 4 est une coupe par un plan central de la pièce de la figure 3;
la figure 5 est une vue en plan d'une autre pièce selon l'invention;
la figure 6 est une coupe par un plan central de la pièce de la figure 5;
la figure 7 est une vue en plan d'une autre pièce selon l'invention; et
la figure 8 est une coupe par un plan central de la pièce de la figure 7.

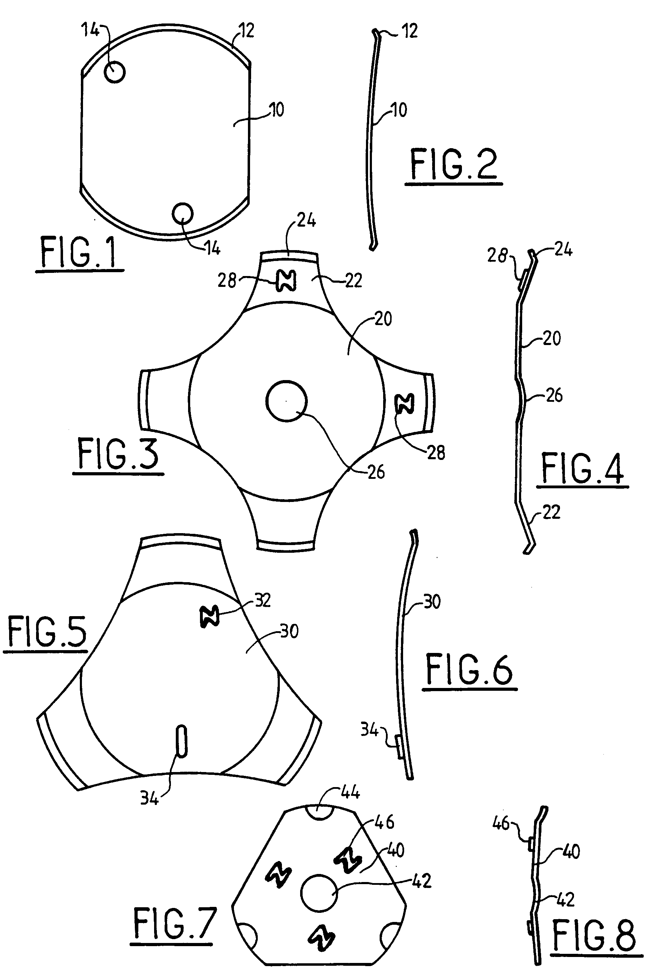

La figure 1 est une vue en plan d'une pièce plate utilisée comme ressort de touche de clavier selon l'invention. Cette pièce plate est formée par une étape de découpe d'un flan dans une feuille métallique plate, ayant par exemple une épaisseur de 0,08 mm. Elle a une forme circulaire légèrement bombée dont deux segments sont coupés. Les deux parties en arc de cercle sont relevées et forment un rebord 12, comme indiqué sur la figure 2. On comprend facilement que deux pièces de ce type peuvent facilement se coller, surtout si elles portent un reste d'huile ou d'un fluide quelconque.

Selon l'invention, la pièce porte de petites saillies 14 qui dépassent d'un coté au moins du flan de la pièce 10. La pièce de la figure 1 a par exemple une épaisseur, mesurée perpendiculairement à son plan, qui est par exemple de 0,76 mm. La tolérance de fabrication sur cette cote est de 0,02 mm. Selon l'invention, les bossages 14 qui dépassent de la pièce ont une hauteur d'au moins 0,05 mm. De cette manière il est certain que deux pièces 10 ne peuvent pas se coller.

La figure 3 représente une autre pièce plate de forme légèrement bombée ayant quatre bras dépassant radialement d'une partie centrale sensiblement circulaire 20. Chaque bras 22 à un rebord 24 d'appui de la pièce, comme indiqué sur la figure 4. Un bossage central 26 est destiné à venir au contact d'une pièce conductrice lorsque le ressort est déformé. Selon l'invention, une saillie 28 est formée sur un bras au moins 22 et elle a une forme en N ou Z. Cette forme en N ou Z est destinée à s'opposer au collage des pièces les unes aux autres indépendamment de leur orientation.

Les figures 5 et 6 représentent une pièce plate très semblable à celle de la figure 3 mais qui comporte trois bras au lieu de quatre. Les saillies 32,34 formées sur à cet pièce ont des formes différentes, l'une ayant une forme en N et l'autre une forme rectiligne.

Les figures 7 et 8 représentent une autre forme de pièce plate 40 ayant un bossage central 42 et dont la partie de contact est formée de trois petites déformations 44 disposées aux extrémités de trois bras. Selon l'invention, cette pièce porte plusieurs saillies 46 ayant une forme en N.

On note que, dans tous les modes de réalisation représentés, les saillies sont disposées sans symétrie de rotation, alors que toutes les pièces ont elles-mêmes une symétrie de rotation. Bien qu'elle ne soit pas indispensable cette caractéristique est avantageuse car elle évite encore mieux le collage éventuel de deux pièces l'une à l'autre.

Comme indiqué en référence à la figure 1, pour que le collage entre deux pièces soit évité avec certitude, il convient que l'écartement donné par les saillies aux pièces adjacentes soit supérieur au double de la tolérance relative à la dimension mesurée dans la direction d'empilement des pièces. Cette tolérance de dimension d'épaisseur est de quelques centièmes de millimètre dans la plupart des cas, et l'écartement qui doit être obtenu est donc au maximum de l'ordre du dixième de millimètre.

Comme les pièces sont réalisées dans une feuille plate, la formation d'une saillie sur une face provoque la formation d'une cavité sur l'autre face. Il convient donc que les saillies ne puissent pas pénétrer dans les cavités de pièces adjacentes de façon trop importante. C'est pour cette raison qu'il est particulièrement avantageux que les saillies aient une forme non simple, par exemple en forme de N ou Z, qui ne permet un emboîtement d'une saillie et d'une cavité qu'avec une ou deux orientations seulement, en plus de leur disposition non symétrique sur les pièces.

En outre, chaque saillie peut dépasser d'un seul coté de la pièce ou des deux, et, lorsque la pièce a plusieurs saillies, certaines peuvent dépasser d'un coté et d'autres de l'autre.

Dans les divers modes de réalisation, les saillies peuvent être formées soit sur le corps de la pièce (figures 1, 5 et 7), soit sur un bras (figure 3), soit sur n'importe quelle partie. Bien entendu, les saillies sont placées à des endroits où elles ne nuisent pas à la fonction de la pièce. Ainsi, si les saillies sont formées sur les rebords 12 et 24, car elles peuvent influer sur la formation d'un contact électrique.

Il est bien entendu que l'invention n'a été décrite et représentée qu'à titre d'exemple préférentiel et qu'on pourra apporter toute équivalence technique dans ses éléments constitutifs sans pour autant sortir de son cadre, tel que défini par les revendications.

## Revendications

1. Procédé de fabrication de pièces plates par des étapes de découpe et de mise en forme d'une feuille d'un matériau élastique, les pièces plates ayant une tolérance de dimension dans la direction de l'épaisseur, du type qui comprend, en plus des étapes de découpe et de mise en forme destinées à donner leur forme aux pièces plates (10, 20, 30, 40), une étape de déformation du matériau de la feuille par réalisation d'au moins une saillie (14, 28, 32, 34, 46) d'un coté de chaque pièce plate (10, 20, 30, 40), cette saillie (14, 28, 32, 34, 46) correspondant à une cavité de l'autre côté de la pièce plate, caractérisé en ce que la cavité est plus petite que la saillie (14, 28, 32, 34, 46) afin que la saillie d'une pièce (10, 20, 30, 40) ne puisse pas pénétrer entièrement dans la cavité d'une autre pièce plate (10, 20, 30, 40) lorsque ces deux pièces sont empilées l'une sur l'autre, l'emboîtement maximal de la saillie (14, 28, 32, 34, 46) dans la cavité d'une pièce adjacente étant tel que, à proximité de la saillie (14, 28, 32, 34, 46) et de la cavité, deux pièces adjacentes (10, 20, 30, 40) ayant les dimensions nominales soient séparées par un espace supérieur au double de la tolérance de dimension dans la direction de l'épaisseur, si bien que deux pièces plates quelconques (10, 20, 30, 40) comprises dans toute la plage de tolérances ne peuvent pas former de surface étendue de contact mutuel.

2. Procédé selon la revendication 1, caractérisé en ce que les étapes de mise en forme et de déformation du matériau de la feuille sont exécutées en même temps sur une même pièce.

3. Procédé selon l'une des revendications 1 et 2, caractérisé en ce que l'étape de découpe comprend la découpe de pièces plates (10, 20, 30, 40) ayant une symétrie de rotation autour d'un axe, et l'étape de déformation forme des saillies (14, 28, 32, 34, 46) qui sont disposées de manière que, ensemble, elles ne présentent pas de symétrie de rotation autour de cet axe.

4. Procédé selon l'une quelconque des revendications précédentes, caractérisé en ce que l'étape de découpe comprend la découpe de pièces plates (10, 20, 30, 40) ayant une symétrie de rotation autour d'un axe, et l'étape de déformation donne des saillies (14, 28, 32, 34, 46) qui, séparément, ne possèdent pas de symétrie de rotation.

5. Procédé selon l'une quelconque des revendications précédentes, caractérisé en ce qu'une saillie (28, 32, 46) au moins a une forme de N ou de Z.

6. Procédé selon l'une quelconque des revendications précédentes, caractérisé en ce que l'étape de déformation est effectuée après l'étape de découpe, et le procédé comprend le positionnement de chaque pièce plate pour l'étape de déformation.

7. Procédé selon l'une quelconque des revendications 1 à 5, caractérisé en ce que l'étape de déformation est effectuée avant l'étape de découpe, et l'étape de découpe est réalisée en position repérée par rapport aux saillies (14, 28, 32, 34, 46) formées dans l'étape de déformation.

8. Pièce plate (10, 20, 30, 40) réalisée à partir d'une feuille d'un matériau élastique ayant une tolérance de dimension dans la direction de l'épaisseur, du type qui comporte au moins une saillie (14, 28, 32, 34, 46) d'un coté de la pièce plate (10, 20, 30, 40), cette saillie (14, 28, 32, 34, 46) correspondant à une cavité de l'autre côté de la pièce plate, caractérisée en ce que la cavité est plus petite que la saillie (14, 28, 32, 34, 46) afin que la saillie d'une pièce (10, 20, 30, 40) ne puisse pas pénétrer entièrement dans la cavité d'une autre pièce plate (10, 20, 30, 40) lorsque ces deux pièces sont empilées l'une sur l'autre, l'emboîtement maximal de la saillie (14, 28, 32, 34, 46) dans la cavité d'une pièce adjacente étant tel que, à proximité de la saillie (14, 28, 32, 34, 46) et de la cavité, deux pièces adjacentes (10, 20, 30, 40) ayant les dimensions nominales soient séparées par un espace supérieur au double de la tolérance de dimension dans la direction de l'épaisseur, si bien que deux pièces plates quelconques (10, 20, 30, 40) comprises dans toute la plage de tolérances ne peuvent pas former de surface étendue de contact mutuel.

9. Pièce (10, 20, 30, 40) selon la revendication 8, caractérisée en ce qu'elle a une symétrie de rotation autour d'un axe, et la disposition des saillies (14, 28, 32, 34, 46) ou la configuration d'une saillie (28, 32, 46) au moins ne présente pas de symétrie de rotation autour de cet axe.

10. Pièce (10, 20, 30, 40) selon l'une des revendications 8 et 9, caractérisée en ce que la pièce plate (10, 20, 30, 40) est un ressort.

## Claims

1. A method of manufacturing flat components by the steps of cutting out and shaping a sheet of resilient material, the flat components having dimensional tolerance in the thickness direction, of the kind which comprises, in addition to the steps of cutting out and shaping that serve to form the flat components (10, 20, 30, 40), a step of deforming the material of the sheet by making at least one projection (14, 28, 32, 34, 46) from one side of each flat component (10, 20, 30, 40), said projection (14, 28, 32, 34, 46) corresponding to a cavity on the other side of the flat component, the method being characterized in that the cavity is smaller than the projection (14, 28, 32, 34, 46) to ensure that a projection of a component (10, 20, 30, 40) cannot penetrate fully into the cavity of another flat component (10, 20, 30, 40) when the two components are stacked, maximum engagement of a projection (14, 28, 32, 34, 46) into the cavity of an adjacent component being such that in the vicinity of the projection (14, 28, 32, 34, 46) and of the cavity, two adjacent components (10, 20, 30, 40) of nominal dimensions are kept apart by a gap greater than twice the dimensional tolerance in the thickness direction, whereby any two flat components (10, 20, 30, 40) lying anywhere within the tolerance range are prevented from forming an extended area of mutual contact.

2. A method according to claim 1, characterized in that the steps of shaping and deforming the sheet material are performed simultaneously for any given component.

3. A method according to claim 1 or 2, characterized in that the cutting-out step includes cutting out flat components (10, 20, 30, 40) having rotational symmetry about an axis, and the deformation step forms projections (14, 28, 32, 34, 46) which are disposed in such a manner that together they do not have rotational symmetry about said axis.

4. A method according to any preceding claim, characterized in that the cutting-out step includes cutting out flat components (10, 20, 30, 40) having rotational symmetry about an axis, and the deformation step gives rise to projections (14, 28, 32, 34, 46) which, separately, do not have rotational symmetry.

5. A method according to any preceding claim, characterized in that at least one projection (28, 32, 46) is N-shaped or Z-shaped.

6. A method according to any preceding claim, characterized in that the deformation step is performed after the cutting-out step, and the method includes positioning each flat component for the deformation step.

7. A method according to any one of claims 1 to 5, characterized in that the deformation step is performed before the cutting-out step, and the cutting-out step is performed in an identified position relative to the projections (14, 28, 32, 34, 46) formed in the deformation step.

8. A flat component (10, 20, 30, 40) made from a sheet of resilient material having dimensional tolerance in the thickness direction, of the kind which comprises at least one projection (14, 28, 32, 34, 46) from one side of each flat component (10, 20, 30, 40), said projection (14, 28, 32, 34, 46) corresponding to a cavity on the other side of the flat component, characterized in that the cavity is smaller than the projection (14, 28, 32, 34, 46) to ensure that a projection of a component (10, 20, 30, 40) cannot penetrate fully into the cavity of another flat component (10, 20, 30, 40) when the two components are stacked, maximum engagement of a projection (14, 28, 32, 34, 46) into the cavity of an adjacent component being such that in the vicinity of the projection (14, 28, 32, 34, 46) and of the cavity, two adjacent components (10, 20, 30, 40) of nominal dimensions are kept apart by a gap greater than twice the dimensional tolerance in the thickness direction, whereby any two flat components (10, 20, 30, 40) lying anywhere within the tolerance range are prevented from forming an extended area of mutual contact.

9. A component (10, 20, 30, 40) according to claim 8, characterized in that it has rotational symmetry about an axis, and the disposition of the projections (14, 28, 32, 34, 46) or the configuration of at least one of the projections (28, 32, 46) does not prevent rotational symmetry about said axis.

10. A component (10, 20, 30, 40) according to claim 8 or 9, characterized in that the flat component (10, 20, 30, 40) is a spring.

## Patentansprüche

1. Verfahren zur Herstellung von flachen Werkstücken durch Zuschneiden und Ausformen aus einer aus elastischem Material bestehenden Platte, wobei die Dicke der flachen Werkstücke einer bestimmten Abmessungstoleranz entspricht und wobei das Verfahren außer den der Formgebung der flachen Werkstücke (10, 20, 30, 40) dienenden Zuschneid- und und Ausformschritten auch noch einen Plattenmaterial-Umformschritt umfaßt, bei dem wenigstens ein Vorsprung (14, 28, 32, 34, 46) an einer Seite jedes flachen Werkstücks (10, 20, 30, 40) ausgebildet wird, wobei dieser Vorsprung (14, 28, 32, 34, 46) einer Aussparung an der anderen Seite des flachen Werkstücks entspricht,
dadurch gekennzeichnet, daß die Aussparung kleiner ist als der Vorsprung (14, 28, 32, 34, 46), so daß der Vorsprung eines Werkstücks (10, 20, 30, 40) nicht vollständig in die Aussparung eines anderen flachen Werkstücks (10, 20, 30, 40) eindringen kann, wenn die beiden Werkstücke aufeinanderliegen, und wobei der Vorsprung (14, 28, 32, 34, 46) in eine Aussparung eines benachbarten Werkstücks maximal soweit eingeschoben werden kann, daß nahe dem Vorsprung (14, 28, 32, 34, 46) und der Aussparung zwischen zwei benachbarten Werkstücken (10, 20, 30, 40) mit Nominalabmessungen ein Zwischenraum verbleibt, der mehr als doppelt so groß ist wie die Toleranz der Dickenabmessung, so daß zwei flache Werkstücke (10, 20, 30, 40), die beliebige, im Toleranzbereich liegende Abmessungen aufweisen, keine gemeinsame Kontaktfläche bilden können.

2. Verfahren nach Anspruch 1, dadurch gekennzeichnet, daß die Formgebung und das Umformen des Plattenmaterials gleichzeitig am selben Werkstück durchgeführt werden.

3. Verfahren nach einem der Ansprüche 1 und 2, dadurch gekennzeichnet, daß der Zuschneideschritt das Zuschneiden von um eine Achse rotationssymmetrischen flachen Werkstücken (10, 20, 30, 40) umfaßt und daß beim Umformen Vorsprünge (14, 28, 32, 34, 46) hergestellt werden, die so angeordnet sind, daß sie zusammen keine Rotationssymmetrie um diese Achse aufweisen.

4. Verfahren nach einem der vorangegangenen Ansprüche, dadurch gekennzeichnet, daß der Zuschneideschritt das Zuschneiden von um eine Achse rotationssymmetrischen, flachen Werkstücken (10, 20, 30, 40) umfaßt und beim Umformen Vorsprünge (14, 28, 32, 34, 46) entstehen, welche einzeln betrachtet nicht rotationssymmetrisch sind.

5. Verfahren nach einem der vorangegangenen Ansprüche, dadurch gekennzeichnet, daß wenigstens ein Vorsprung (28, 32, 46) in Form eines N oder eines Z gestaltet ist.

6. Verfahren nach einem der vorangegangenen Ansprüche, dadurch gekennzeichnet, daß der Umformschritt nach dem Zuschneideschritt durchgeführt wird und das Verfahren weiterhin das Ausrichten jedes flachen Werkstücks für den Umformschritt umfaßt.

7. Verfahren nach einem der Ansprüche 1 bis 5, dadurch gekennzeichnet, daß der Umformschritt vor dem Zuschneideschritt durchgeführt wird und das Zuschneiden in einer Ausrichtung erfolgt, die unter Berücksichtigung der während des Umformschritts hergestellten Vorsprünge (14, 28, 32, 34, 46) ermittelt wird.

8. Flaches Werkstück (10, 20, 30, 40), welches aus einer aus einem elastischen Material bestehenden Platte hergestellt wird, wobei die Dicke innerhalb bestimmter Abmessungstoleranzen liegt und wobei an einer Seite des flachen Werkstücks (10, 20, 30, 40) wenigstens ein Vorsprung (14, 28, 32, 34, 46) vorgesehen ist und dieser Vorsprung (14, 28, 32, 34, 46) einer Aussparung an der anderen Seite des flachen Werkstücks entspricht,
dadurch gekennzeichnet, daß die Aussparung kleiner ist als der Vorsprung (14, 28, 32, 34, 46), so daß der Vorsprung eines Werkstücks (10, 20, 30, 40) nicht vollständig in die Aussparung eines anderen flachen Werkstücks (10, 20, 30, 40) eindringen kann, wenn die beiden Werkstücke aufeinanderliegen, und wobei der Vorsprung (14, 28, 32, 34, 46) in eine Aussparung eines benachbarten Werkstücks maximal soweit eingeschoben werden kann, daß nahe dem Vorsprung (14, 28, 32, 34, 46) und der Aussparung zwischen zwei benachbarten Werkstücken (10, 20, 30, 40) mit Nominalabmessungen ein Zwischenraum verbleibt, der mehr als doppelt so groß ist wie die Toleranz der Dickenabmessung, so daß zwei flache Werkstücke (10, 20, 30, 40), die beliebige, im Toleranzbereich liegende Abmessungen aufweisen, keine gemeinsame Kontaktfläche bilden können.

9. Werkstück (10, 20, 30, 40) nach Anspruch 8, dadurch gekennzeichnet, daß das Werkstück um eine Achse rotationssymetrisch ist, während die Vorsprünge (14, 28, 32, 34, 46) so angeordnet sind bzw. wenigstens ein Vorsprung (28, 32, 46) so gestaltet ist, daß keine Rotationssymetrie um die genannte Achse gegeben ist.

10. Werkstück (10, 20, 30, 40) nach einem der Ansprüche 8 und 9, dadurch gekennzeichnet, daß es sich bei dem flachen Werkstück (10, 20, 30, 40) um eine Feder handelt.
